# EUROPEAN PATENT SPECIFICATION

(11) **EP 1 395 527 B1**
(45) Date of publication and mention of the grant of the patent: **19.10.2005**
(21) Application number: 02742975.2
(22) Date of filing: 08.05.2002
(51) Int. Cl.: C04B 26/02, B29B 17/00, C04B 26/00

(54) **COMPOSITIONS COMPRISING SOLID PARTICLES AND BINDER**
ZUSAMMENSETZUNGEN ENTHALTEND FESTE PARTIKELN UND BINDEMITTEL
COMPOSITIONS CONTENANT DES PARTICULES SOLIDES ET UN LIANT

(30) Priority: 08.05.2001 EP 01304133
(43) Date of publication of application: 10.03.2004
(73) Proprietor: SHELL INTERNATIONALE RESEARCH MAATSCHAPPIJ B.V., 2596 HR Den Haag (NL)
(72) Inventor: BLANKEN, Thomas, Carel, NL-1031 CM Amsterdam (NL); VAN HELDEN, Arend, Kuindert, NL-1031 CM Amsterdam (NL); MAJOOR, Joannes, Cornelis, Jozef, Emmanuel, NL-1031 CM Amsterdam (NL); MOOIWEER, Hendrik, Harm, NL-1031 CM Amsterdam (NL); REYNHOUT, Marinus, Johannes, NL-1031 CM Amsterdam (NL); WISSE, Willem, NL-1031 CM Amsterdam (NL); SCHONEVELD, Erik, NL-1031 CM Amsterdam (NL)
(86) International application number: PCT/EP2002/005084
(87) International publication number: WO 2002/090288

(56) References cited:
- WO-A-93/08974
- WO-A-94/27800
- WO-A-96/02373
- DE-A- 19 710 895
- NL-A- 8 200 730
- DATABASE EPODOC [Online] EUROPEAN PATENT OFFICE, THE HAGUE, NL; XP002212925 & KR 9 611 322 B (KIM JAE WAN) 22 August 1996 (1996-08-22)
- DATABASE WPI Week 198650 Derwent Publications Ltd., London, GB; AN 1986-328832 XP002212926 & JP 61 244736 A (CALP KOGYO KK)
- ABDEL-AZIM A-A A ET AL: "MAKING POLYMER CONCRETE AND POLYMER MORTAR USING SYNTHESIZED UNSATURATED POLYESTER RESISN FROM POLY(ETHYLENE TEREPHTHALATE) WASTE" POLYMERS FOR ADVANCED TECHNOLOGIES, JOHN WILEY AND SONS, CHICHESTER, GB, vol. 6, no. 11, 1 November 1995 (1995-11-01), pages 688-692, XP000539142 ISSN: 1042-7147

## Description

### Field of the Invention

The present invention relates to compositions, especially construction elements, comprising solid particles and a binder, and to a process for their preparation.

### Background of the Invention

Polymers, in the form of synthetic plastics, have become in recent years a staple material useful in a wide range of convenience and consumer products. The use of polyesters in drinks bottles and food containers can be particularly highlighted for the recent seemingly exponential growth in the consumption of polymeric materials. However such increased usage for short-life consumer products creates a high volume of used materials, which brings with it the problem of disposal.

The very stability and general indestructibility of synthetic polymers, which causes such great demand for these materials, also causes severe problems for disposal. Disposal in landfill sites is unattractive because the polymers can remain unaltered in the ground for years. Disposal by incineration can yield noxious gases and/or carbon dioxide emission depending on the polymers involved. Biodegradable plastics have been introduced on a very small scale but are not the preferred materials for most applications, and even so the time for biodegradation is lengthy. Attention therefore in recent years has turned to re-use or recycling of synthetic polymer materials.

Many proposals have been made for the recycling of the synthetic materials commonly used in short-life consumer products. Such synthetic polymers generally fall in the class of polyester polymers, such as, for example, PET [poly(ethylene terephthalate)] used extensively in bottles and food containers. However because of the nature of the products for which they are used, it is uneconomic to recycle such materials for re-use as the same product. To reuse as bottles and food containers, for example, or in many other existing or proposed uses, the used bottle or food materials have to be recovered as virtually pure product, ie clean and stripped of all labelling and non-PET components, for re-processing to make consumer products.

There is a continuing drive within the consumer product industry for increasingly improved polymer products: for bottles which have better barrier properties, and therefore an extended usage area and generally for minimal or no contamination of food/drink contents. Technically therefore polymer products made from, for example PET and related polyesters, are becoming increasingly complex in order to improve performance and attractiveness, but this brings with it additional reduced recyclability because of the presence of additives and contaminants or the use of polymer mixtures or different polymers in complex, eg multilayer, composite structures. The complexity of the improved products increases the requirement for virtually pure polymer in recycling, yet this very complexity makes the isolation of virtually pure polymer difficult and uneconomic.

Proposals for the use of polymer materials, especially waste or used materials, which utilise the waste or used polymer products directly without the need for cleaning and re-processing could be commercially attractive since this avoids recovery of pure polymer for re-use. One area where such direct use has been explored is the use of polymer materials in products for the construction industry.

International patent publication WO 00/46164 describes a solid state composition which comprises solid particles, other than solely carbon particles, combined with a hydrocarbonaceous binder which exists as a two-phase system of asphaltenes in hydrocarbons. The solid particles in such compositions may be selected from a wide range of materials, including polymers, but preferably are shells, mineral particles and/or wood particles. Such compositions find especial use as a replacement for concrete. International patent publication WO 01/62476 expands on this proposal in describing a method of manufacturing a building product from a mix of particulate material and a thermoplastic binder, which may be for example polyethylene, polyurethane or polyvinylchloride, by heating the mix, shaping via a pressing action and cooling. A bituminous binder is preferred because of the excellent flexural strength and other attributes such a binder brings to the resulting building products.

German Patent Specification No. 197 10 895 proposes a method of agglomerating fine particles with polymer materials to assist with the handling or disposal of fine, especially waste, particulates. While a wide range of particulates and polymers is disclosed, preference is given to agglomeration of either sand from the gravel industry or the iron dust or powders which cause a problem in the foundry industry. Each is shown to be agglomerated with a mix of waste polymer having a high proportion (respectively 95 and 97% by weight in the two Examples) of polyethylene and polypropylene. The agglomerate is prepared by adding the unheated waste polymer(s) to solid material preheated to 90 to 250°C, thereby melting the polymer using the stored heat, the mixture is then homogenised and where appropriate moulded and cooled. There is no suggestion that direct use of such a formed mix of particulate and waste polymer as strong construction materials is at all possible.

Processes are also known for producing construction or other material from comminuted household or industrial waste and binding it with polymeric materials for re-use as construction materials or paving (GB-A-2 291 419 and US-A-5,403,117). Patent specification LV-B-12442 reviews a process for making composite building elements using heated (to a temperature of 350 to 400°C), comminuted building waste, sand or shingle mixed with unheated polyethylene and polyethylene terephthalate waste which is then cut up whilst being mixed with and heated by the particulate material. This document refers to earlier proposals, which also use preheated particulate material (to temperatures of 100 to 250°C, or 50 to 350°C) in combination with polymeric binders.

### Summary of the Invention

We have now devised a process for preparing composites of polymeric binder and solid particles having a high strength, which is particularly suitable where recycled or waste polymer is to be used.

Accordingly the present invention provides a process for the preparation of a composition, which comprises a matrix of solid particles embedded in a binder, wherein the binder is present in an amount in the range of from 15 to 50 % by weight and comprises waste or recycled polymer selected from the group of polypropylene, polyethylene terephthalate, polybutylene terephthalate and mixtures thereof, which process comprises mixing heated particles and binder, shaping if desired, and allowing the mixture to solidify, wherein the binder is heated prior to mixing to a temperature in the range of from 50 to 240°C, and the solid particles are heated prior to mixing to a temperature in the range of from 150 to 350°C, both heated independently of each other prior to mixing, such that on mixing the temperature of the mixture is in the range of from 230 to 300°C, the solid particles being heated to a higher temperature than the binder.

While it is possible to prepare such composite materials using other processes such as in the prior art where one or both of the components is mixed unheated and if necessary followed by heating to cause the polymeric binder to melt, the process of the present invention has been found to yield composite materials of extremely high flexural strength.

In the process of the present invention, recycled polymeric materials can easily be used in waste or used form without cleaning or separation from mixtures of polymers or from additives.

In composite building products, it is likely that the solid, non-polymeric particles would normally form the lowest cost material part of the product. It therefore may be desirable for the more expensive binder material to comprise as low a proportion of the composition of the present invention as possible to be consistent with strength retention etc.. We have found that it is possible to prepare strong construction elements using minor amounts of polymeric materials as binder. However we have additionally found that increasing the binder content yields products of a substantially increased strength; such composites can be used for high value products. Because of their attractive appearance such composite materials can also be used as decorative construction materials.

We have further found that certain compositions of solid particles and polymeric binder are particularly useful. Accordingly the present invention also provides a composition which comprises a matrix of solid particles, which comprises at least two groups of particle types selected from aggregate, sand and filler, embedded in a binder, which is predominantly polyethylene terephthalate, wherein the binder is present in an amount in the range of from 1 to 50% by weight.

Such compositions have a particularly high flexural strength and other useful properties for construction purposes such as compression strength, tensile strength, hardness, etc.. The present invention therefore provides for the use in construction of compositions of the present invention or those obtainable by the process of the present invention, especially in the form of construction elements.

Construction elements of the present inventions also comprise decorative elements for use in the building industry.

### Detailed Description of the Invention

According to the present invention, a process for the preparation of a composition, which comprises a matrix of solid particles embedded in a binder, wherein the binder is present in an amount in the range of from is to 50 % by weight and comprises a specific synthetic thermoplastic polymer, is provided which comprises mixing heated particles and binder, shaping if desired, and allowing the mixture to solidify, wherein solid particles and binder are heated independently of each other and to a different temperature prior to mixing such that, on mixing, the temperature of the mixture is in the range of from 230 to 300°C, the solid particles being heated to a higher temperature than the binder.

Heating of both solid particles and of polymeric binder in composite materials has been suggested in WO 93/08974. The use of heating regimes of the process of the present invention allows that only moderate heating of both components is necessary in order to achieve a desirable mixture temperature which will permit the polymeric binder to melt and mix thoroughly with the solid particles. Prior art proposals often solely heat the solid components because naturally that is the easiest option for handling purposes; however in the past either the solid particles are not heated to an adequately high temperature to allow full melting of the polymeric binder or are heated to an overly high temperature to ensure that the binder liquefies. In the latter there is the substantial risk that hot-spots will occur in the polymeric binder which will cause de-polymerisation which will affect the strength and integrity of the final product, rendering it unusable for any purpose which requires such properties.

Where the polymeric binder is derived from recycled materials, the preheating of the binder can ensure that the binder material is dry. This is also important as liquid in the binder, for example from using recycled, untreated plastics bottles, can also cause degradation of the polymer during processing and can weaken mechanical strength of the final composition.

A mixture of polymers may also be used, as binder. Very suitably only one polymer forms the bulk of the hinder, ie is present in an amount of 50 % by weight (based on total binder) or more; herein a polymer utilised in such an amount is termed the predominant polymer. Preferably the predominant polymer present as the binder is a polyester, but other thermoplastic polymers may be used as the predominant polymer or as an additional polymer in the binder. A very suitable additional polymer is polypropylene (herein PP).

The main polymer present as the binder in the process of the invention is selected from polyethylene terephthalate (PET) polybutylene terephthalate and polytrimethyl terephthalate. PET is the most preferred. For such use of polymer material, the polymer is waste or used polymer. The term 'waste' herein includes discarded but unused materials, such as off-specification polymer from manufacturing plants; the term 'used' herein is also termed 'recycled'. Especially preferred as the predominant polymer is used/recycled PET, especially PET from packaging applications, particularly used PET bottles.

Very suitably, the polymeric binder is granulated or shredded into flakes prior to use in the process of the invention.

When the polymer is waste or recycled polyethylene terephthalate, optionally in admixture with waste or recycled polypropylene, then it is further preferred that the binder is preheated to a temperature in the range of from 180 to 240°C and for the solid particles to be preheated to a temperature of 300°C.

In the process of the invention, it is not necessary that all of the solid particles are added to the polymeric binder prior to mixing. It is indeed convenient if only a portion of the solid particles are mixed with the binder initially. Where the solid particles used are varied in size, then conveniently the larger particles are mixed with the binder first to form a well mixed or homogenous mixture and then the smaller particles are added and mixing continued. In such a case it may be that the later added particles need not be preheated prior to mixing. However, it is preferred that all the particles, regardless of the stage when they are mixed with the binder, are preheated.

Where solid particles are used which are a combination of aggregate, filler and sand, then it is very suitable if all of the particles are heated prior to mixing with the binder, with the aggregate and sand materials being mixed first with the binder, and the filler added subsequently during mixing.

We have additionally found that certain compositions of solid particles and polymeric binder are particularly useful. Accordingly the present invention also provides a composition which comprises a matrix of solid particles, which comprises at least two groups of particle types selected from aggregate, sand and filler, embedded in a binder, which is predominantly polyethylene terephthalate, wherein the binder is present in an amount in the range of from 1 to 50% by weight.

Previous proposals concerning the use of PET-based binders with solid particulates have used predominantly small particulates, see, for example, JP 61-244 736-A and WO 93/08974.

The compositions of the present invention possess a particularly high flexural strength and other useful properties for construction purposes such as compression strength, tensile strength, hardness, etc.. The present invention therefore provides for the use in construction of compositions of the present invention or those obtainable by the process of the present invention, especially in the form of construction elements.

As used herein a construction element is to be understood to be a self-contained, solid component usually of fixed dimensions, which is used in construction and therefore has sufficient flexural strength to be capable of load- or weight-bearing. Conventional cement concrete materials take from 7 to 28 days to set and yield a product of usable flexural strength; the construction elements of the present invention are however 'on strength' very soon after production and cooling, that is the flexural strength is shown by construction elements of the present invention within minutes of production for small elements and within a day for large elements. The term construction elements includes but is not limited to, building elements such as pipes, tiles, including wall tiles, floor tiles, and roof tiles, paving stones (pavers), flagstones, bricks, building claddings, foundations, boards, gutters and/or conduits. The dimensions of construction elements according to the invention will be set by the use proposed.

The compositions of the present invention are also extremely visually attractive and therefore also find use as decorative materials. Depending on the solid particles used the compositions can resemble marble or granite both visually as well as in terms of strength. Thus while it is possible for the compositions or construction elements according to the present invention, or prepared by the process of the invention, to be a replacement for conventional bulk-use structural compositions such as concrete; these compositions or elements are especially attractive to use as a 'cultured' marble or granite for example for luxury floor tiles, wall tiles, roof tiles, building claddings, and for kitchen work surfaces.

When used in construction according to the present invention, the compositions or construction elements of, or prepared by, the present invention have the further, significant advantage that they themselves can be recycled for re-use in a simple, economic process. Thus not only do they provide a means by which, for example, used polyesters can be re-used, but also the products themselves are re-usable and do not give rise to deferred disposal or environmental concerns. This means that the present waste problem associated with eg post-consumer polyesters is resolved in a sustainable way.

If desired in order to increase the load-carrying properties, the compositions or construction elements of, or prepared by, the invention can contain reinforcements such as steel bars, steel fabric, polymers, glass fibres, carbon fibres, carbon flakes and/or carbon fabric. However the flexural strength shown by the materials of the present invention is such that for most applications such as floor tiles etc., no further strengthening is necessary. It can be useful to have materials of different colours and this can be accommodated by the inclusion of pigments into the materials during production, either through simple addition of a colorant or by use of coloured solid particles.

The polymeric binder in compositions of the invention is present in an amount of from 1 to 50% by weight. Suitably at least 5 or very suitably at least 15% by weight polymeric binder is present. Preferably the binder is present in an amount of from 5 to 45% by weight, more preferably from 15 to 45%, most preferably from 15 to 35% by weight. Good results in terms of a high flexural strength of the resulting materials have been found with the use of from 20 to 35% by weight polymeric binder, but as little as from 10% by weight, or less, polymeric binder, especially in the form of PET or PET plus PP, can provide sufficiently good flexural strength for some applications. Indeed it can be economically favourable, and still yield a product of good flexural strength, to use in the range of from 5 to 25% by weight, conveniently 10 to 20% by weight, of polymeric binder.

The predominant polymer present as the binder is polyethylene terephthalate. For such use of polymer material, the polymer does not have to be pure; in fact for economic reasons it is most preferably waste or used polymer. The term 'waste' herein includes discarded but unused materials, such as off-specification polymer from manufacturing plants; the term 'used' herein is also termed 'recycled'. Especially preferred as the predominant polymer is used/recycled PET, especially PET from packaging applications, particularly used PET bottles.

In recycled form the polymer, eg PET, can be utilised when contaminated with e.g. bottle contents; with paper labels/ glues, with polypropylene caps or aluminium caps, with oil or dirt, sand, clay. It is also possible to use eg PET bottles that have multilayers, e.g. of ethyl vinyl acetate (EVA), or nylon, silica or clay, or epoxy resin coating, and including comonomers and/or additives. Recycled PET polymer can be in the form of coloured bottles, or mixed colour bottles. PET with different viscosity index can also be used. It can even be for example PET contaminated with other polymers: polyvinyl chloride (PVC) or even polypropylene, LDPE , HDPE, and polystyrene. Possibly even thermoset polymers, textile, and other polyester or polyamide waste could be utilised in small quantities alongside the recycled polymeric materials.

Preferably the binder is composed of the required synthetic thermoplastic polymer in an amount which is at least 50%, more preferably at least 75%, especially at least 80%, and more especially at least 90% by weight based on total binder. The polymer therefore may comprise in the range of from 50 to 100 % by weight of total binder.

When utilised in waste or used form, particularly the latter, there will normally be contaminants present with the polymer, which will form part of the binder. Thus there may be in the range of from 0.001 to 5, especially 0.001 to 2, % by weight of non-polymeric component in the binder.

Where the binder is not solely the predominant polymer, the remainder can be selected from any one of a number of materials which can enhance the strength or other properties of the binder or of the construction element, but is most preferably additional waste material which is associated with the used polymer, eg recycled or waste polyester, for example other polymers or non-polymeric materials from for example bottle caps, labelling materials, and/or any of the above-mentioned contaminants.

Surprisingly it has been found that the combination of small amounts of polypropylene (PP), for example used PP, with used PET allows easier preparation of the composition of the invention and may lead to an improved product as compared with the same product solely having used PET as binder. A very useful binder comprises from 70 to 90 wt% PET, preferably waste or recycled PET, and especially 80 to 85 wt% PET, with the remainder being polypropylene, especially waste or recycled polypropylene. Of course it will be appreciated that in such combinations, a small amount (for example up to 1 or 2 % by weight) of contaminant materials may additionally be present in the binder if recycled, eg bottle, materials are used.

In principle, any suitable solid particles can be used in the composition of the present invention, or in the process of the present invention; suitably the solid particles are not polymeric material. The solid material needs to maintain its solid nature, ie to be able to avoid degradation, at the temperature of preparation of the composition of the present invention.

A non-exhaustive list of solid particles which can be used comprises mineral particles, cement, concrete, dust, recycled asphalt, recycled tyres, clay, old sand, crushed or recycled granite, porous particles such as zeolite and perlite, shells, crushed shells, organic waste such as leaves and bones, fly-ash, rubber, glass, and metal particles such as aluminium scrap. Solid particles which give particularly good results are mineral particles, especially combinations of stones, such as pebbles, and sand materials.

Preferably, the solid particles are a combination of particles having a particle size of at most 63 micrometers (so-called filler) and particles having a particle size in the range from 63 micrometers to 2 mm (so-called sand), especially having a maximum size of 0.5 mm, and particles having a particle size in the range from 2 to 32 mm (so-called stones or aggregate), preferably from 2 to 16 mm, especially from 2 to 8 mm, optionally in combination with particles having larger sizes. The particle sizes are measured by sieving with sieves having openings of the indicated size. By the ASTM method this can lead to sand being measured as having a lower grain size of 0.

Preferably, the amount of each of filler, sand and stones is in the range from 10 to 70 % by weight, (the combination to total 100 % by weight) based on total amount of solid particles. Solid particles having a particle size of more than 32 mm may be present if large objects are to be made. If no sand and/or filler is incorporated in a construction element of the present invention, then a porous yet solid composition can be made.

Further, the composition according to the present invention, or prepared by the process of the invention, may comprise magnetic materials such as iron particles, if a magnetic composition is desired. Similarly graphite can be added to confer electrical conductivity or for reinforcement, or a material with a high dielectric content, such as barium titanate, can be added if a capacity for electrical conductivity is desired.

If the composition or construction element is to be used for load-bearing, heat insulation materials, the material can contain solid particles to increase its heat insulation properties. If the composition or element is to be used for conducting heat, then it can contain solid particles to increase its heat conductivity properties. Similarly, if the composition or element is to be used for sound insulation or dampening, it can contain solid particles to increase its sound insulation and/or dampening properties.

The compositions of the present invention have a good flexural strength in accordance with the standard NEN 7014, "Nederlands Normalisatie Instituut", 2^{nd} edition, 8/1974, or with the Dutch building standard NEN EN 198-1. Preferably, the flexural strength is at least 3 N/mm², more preferably at least 7 N/mm² by the former method, more preferably at least 10 N/mm², most preferably at least 20, and especially at least 30 N/mm² as measured by the latter method.

It has been found that the good flexural strength of the compositions of the invention can be maintained even after exposure to organic solvents and after exposure to acid solutions. In particular, PET-based construction elements of the invention have been found to exhibit a very low adsorption of organic solvents and maintain a clean surface. This makes such elements attractive for uses where they may be exposed to hydrocarbons in use, such as paving or building materials on industrial, refining and/or petrol retail sites, or to acidic materials in use, such as sewer piping, biological treatment plants, and again industrial (especially chemical) sites. Conventional materials such as cement concretes are often excluded from use in areas such as retail stations because of their ability to adsorb hydrocarbons, which can then pass through the concrete and cause ground contamination.

It has been found that good compression strengths can also be exhibited by the compositions or construction elements of the present invention. Compression strengths as measured by the Dutch building standard NEN EN 196-1 which can be obtained are 50 N/mm² or more, preferably 80 N/mm² or more; possibly strengths of 100 N/mm² or more may be achievable. The presence of micro-reinforcement particles, such as graphite or carbon fibres, may increase the flexural and compression strength. However, for many applications such high compression strengths are not necessary.

In order to further improve the properties of the polymeric binder, the compositions or construction elements of the present invention, or prepared by the process of the invention, can contain conventional additives for further increasing hardness, flexural strength and/or adhesion. Suitably, a composition or construction element may comprise up to 3 % by weight of iron and/or one or more iron-or red mud-(a waste stream from aluminium production which contains significant amounts of iron oxide) containing compounds, based on amount of polymeric binder, more preferably from 0.001 to 1 % by weight. Most preferably, the iron compound is iron oxide. The iron and/or iron compound can simultaneously act as pigment.

The compositions or construction elements of, or prepared by, the present invention can comprise further compounds to change the properties of the final product and/or to facilitate manufacture of the construction element and/or final product. A non-exhaustive list of further compounds which can be present comprises heavy paraffins, sulphur, polyethylene, polypropylene, ethylene vinyl acetate, elastomers and polymers containing available epoxy groups as described in WO 96/28513.

All such additional compounds should only be present in minor amounts, suitably at most 5 % by weight based on the total composition/element, and usually will be present in much lower amounts, for example in the range of from 0.1 to 1 or 2 % by weight.

The appearance of the compositions or construction elements of the present invention can be changed as desired for its application. In order to change the colour, any of the conventional pigments can be used, one example being red mud filler material as mentioned above. In order to obtain a smoother surface, the surface can be treated with a flame or the sizes of the solid particles can be adjusted, as known to someone skilled in the art. In order to improve the appearance, the surface can be treated with wax or wax-like materials such as bees wax, petroleum wax, synthetic wax or silicones containing polish.

It has been found that certain fillers can be particularly useful in the compositions or construction elements of the present invention, or prepared by the process of the invention. To impart colour, iron oxides are very useful. To assist with both colour and absorption of hydrogen chloride gas, which can be released at elevated temperatures if PVC is present in the polymeric binder, calcium carbonate may be used. Further it has been found that the use of titanium dioxide, also a good colourant, imparts improvements in flexural strength to a composition/element of the present invention. Titanium dioxide is preferably present in an amount in the range of from 2 to 9, more preferably 3 to 8, especially 5 to 5.5, % by weight, basis total composition.

The composition of the present invention can be prepared in any suitable way. Optionally, the polymeric binder can be made into a suspension or emulsion which is subsequently mixed with the solid particles. Preferably the solid particles will be mixed with molten polymeric binder, e.g. the polymer is melted, and mixed with either cold or warm solid particles, or hot solid particles are mixed with hot or cold binder. The polymers suitable for use in the present invention as the predominant polymer in the binder in general melt at temperatures in excess of 200 °C, for example, the composition of the present invention may be made by mixing with heating the solid particles and polymer at a temperature which is at least that sufficient to cause the polymer to become molten or to become sufficiently sticky to bind the solid particles, and then allowing the resulting mixture to solidify.

It is useful that in the mixing stage mechanical energy, such as from stirring with a rigid, eg steel, stirrer, or from extrusion is applied to assist with heating in obtaining good mixing or, at low binder amounts, a thin film around the majority of the solid particles. It is possible that the addition of a flux or an organic solvent in small quantities can aid softening of the polymer and mean that lower temperatures than otherwise possible can be used for the preparation process.

It may be useful to combine shaping of the construction element with the heating step, for example by heating with compression, or heating while placing into a mould. One suitable method of preparation is that described in WO 01/62476.

It has been found that the shape of the polymer material is significant in enabling ease of manufacture, in particular ease of mixing and ease of removal from a mould on cooling. Preferably the polymer is utilised in the form of particles, chips or flakes. Particles having a needle-like or 'vermicelli' shape are less preferred. Particularly good materials have for example been prepared using flakes or chips of PET material of approximate size 5mm by 5mm by 1mm thick, or 10mm by 10mm by 2mm thick. In large-scale or commercial use, naturally larger flakes or particles could be utilised.

The preferred temperature of operation of the process is dependent upon the polymer type utilised as binder and also on the shape of the polymer if used in particulate form. Generally, the conditions of temperature and of mixing that are best suited for a particular particle and binder combination can easily be ascertained by simple routine experimentation. Generally, the larger the particle, the higher the temperature for melting the polymer or rendering it sticky. The presence and size of the solid, non-polymeric particles can also influence the temperature utilised.

Preferably the temperature of mixing will be in the range of from 200 to 300 °C, more preferably from 240 to 300 °C. Useful results when utilising PET as the main binder material have been obtained when mixing at a temperature of 240 °C. It has also been found useful for both the particles and the binder materials to be preheated before mixing, and especially if the solid particles are heated to a higher temperature than the polymeric binder. The time required for effective mixing to occur depends to some extent on the temperature of mixing and, if preheated starting materials are used, on the difference in temperature between the two components. It may however be desirable with certain combinations to have the preheat temperature of the two components as close as possible in order to minimise mixing time.

It can be useful also to keep the mixture following mixing with heating, at an elevated temperature for a further period of time, before shaping and cooling. In certain circumstances, such heating can increase the strength of the resulting construction element. This heat treatment can be carried either at the temperature of mixing or at a slightly higher, for example at most 300 °C, or lower temperature, for example at least 100 °C, and for a period of time in the range of from 10 minutes to 1 hour. Higher temperatures and longer times can be applied but are not attractive for economic reasons and because this can cause de-polymerisation of the polymeric binder.

As noted above, it can additionally be useful to preheat both the polymeric component and the solid particles before mixing.

The shaping step can be carried out in any suitable way known to the skilled person for obtaining the desired end-product. Thus for obtaining tiles, bricks, plates and decorative articles, shaping can be by compression moulding. In order to prepare pipes, extrusion can be used for shaping. Both techniques are well known to the skilled person.

For cooling, naturally the formed heated compositions may be allowed to cool on their own but as this can take a long time, it is convenient to quench the formed products, for example with water, to accelerate cooling.

It may be possible to prepare the compositions according to the present invention, by using the polymeric binder, optionally together with the solid particles, in the form of binder-containing particles, more specifically in the form of binder-containing granulate or powder. Either none, part or all of the solid particles may be present in the binder-containing particles. Binder-containing particles are easy to use in transport and during manufacture. Such binder-containing particles may contain the optional further additives mentioned above, such as pigments.

Preferably, however, the compositions of the present invention are prepared by the process of the present invention.

The present invention will now be illustrated by way of the following Examples.

### EXAMPLES

In the following Examples:
The "Marshall method" applied has been described in "Standaard Regelgeving Advisering Wegenbouw", 1995, test 47 (pages 111-119) with the difference that the particle size distribution of each batch of solid particles was measured and the different batches were combined to obtain the desired particle size distribution, instead of separating the mineral aggregate into separate fractions.
Grain size distribution for individual components was determined by sieving with ASTM sieve sets.
All percentages are given on a weight basis, unless otherwise specified.

### Examples 1 to 4

The flexural strength in these Examples was measured according to the standard 3 point bend test which provides results that correlate to the NEN 7014 test of the "Nederlands Normalisatie Instituut", 2^{nd} edition, 8/1974, as described in the handbook "Standard RAW Bepalingen 1995" issued by C.R.O.W.; ISBN 90-6628-198-7.

### Example 1

Clear, used PET (polyethylene terephthalate) bottles were treated to remove the labels, the polypropylene caps and the bottle bottoms and upper portions of the bottles which contained the thickest sections of the bottles. The remainder of the PET bottles were shredded to form clear flakes of approximate size 5mm by 5mm by 1mm thick.

500g aggregate, grain size 2 to 8mm, and 500g sand, grain size 0 to 4mm, were mixed and heated to 240 °C in a mixing bowl. With continuous mixing and with heating provided by the heated particulates, then also 130g of the clear, unheated PET flakes were added. After a homogeneous mixture of the aggregate, sand, and polymeric binder was obtained, 150g filler in the form of crushed clay bricks of grain size of less than 0.063mm, was added with continued mixing to the heated mixture. Following addition of all the filler, the entire mixture was heated in an oven at 250 °C for 10 minutes until all the polymer had liquefied; stirring was continued.

The mixture was then poured into a container and compressed to a stone of dimensions 200 mm by 100 mm by 20 mm under compression through a 15 tonne load on the 200 mm x 100 mm surface. No material was left in the mixing vessel, which indicates the good workability of the PET binder and minimum 'stickiness' of the final, prepared composition.

The container was then quench cooled in water and the product stone easily taken out.

The stone had the appearance of a glossy enamelled brick.

The flexural strength was assessed by adding weights over time to a disc taken (from the product stone using a diamond-coated disc cutter) until the disc broke. On examination of the fracture surface it could be seen that the break was clean with many of the aggregate particles themselves being broken, indicating that the binder was tightly adhered to the aggregate. The disc was assessed as having a flexural strength of at least 7 MPa, the breaking strength of the aggregate material used.

### Example 2

This Example was carried out using the same size and amount of aggregate, sand and filler as for Example 1 and the same amount of PET but in this Example the labels were not removed from the used PET bottles prior to shredding, and also instead of shredding to flakes, the PET was shredded to a 'vermicelli' of approximate size 5 mm by 150 mm.

Following the same procedure as for Example 1, except that the aggregate and sand were preheated to 270 °C and the PET 'vermicelli' were also preheated to 180 °C prior to addition to the aggregate and sand, a product stone was prepared by placing the final heated mix into a preheated mould of size 10 cm diameter and 7.5 mm thickness and a cylindrical block prepared sized as blocks made according to the Marshall method and subsequently cut into test discs ("Marshall discs"). It was noted that because of the longer length of the 'vermicelli', the mixing was less efficient than for Example 1 in that the mixing took longer and also a higher temperature proved to be necessary to soften the polymer chips.

The flexural strength of this Marshal disc was 5.9 MPa.

### Example 3

According to the method of Example 2 the following components were made into Marshall blocks and 100mm discs prepared for testing. Neither the product stone nor the discs showed any shrinkage cracks.
39.6 wt% aggregate grain size 2 to 8 mm
39.6 wt% sand grain size 0 to 4 mm
10.8 wt% wigro filler
8.1 wt% PET flakes sized as in Example 1, and prepared by grinding PET bottles having mixed colours
1.8 wt% polypropylene (PP) flakes prepared by grinding polypropylene caps from PET bottles and utilised with no preheating.

Wigro filler is a chalk powder which is obtainable from the company Winterswijkscher Steen en Kalkgroeve B.V. and has a particle size of between 0.001 to 0.02 mm.('Wigro' is a trade name.)

When tested, the flexural strength was found to be between 6 and 7 MPa.

### Example 4 - Immersion Tests

The product of Example 3 was tested for resistance to exposure to acid and to hydrocarbons such as could be found in use as paving materials for example in industrial or petrol retail premises. Separate Marshall test discs of the materials were kept immersed in Shell Sol K (a non-aromatic solvent available from Shell Chemicals) and in 1 molar HCl solution over time and then the 3 point bend test applied to assess stability of flexural strength.

Flexural strength was assessed after 1 day, after 7 days and after 14 days. The flexural strength of each test disc was the same on each test occasion, ie the discs had retained their strength over time.

The weight of each disc immersed in Shell Sol K was also assessed on each test occasion. At the end of 14 days the disc weight increase was very low at 1.2 w%.

Thus, it can be seen that the product of the invention shows a high resistance to hydrocarbon exposure and to acid exposure.

Conventional cement concrete is known to have little resistance to acid exposure. Composite construction elements prepared from asphaltic binder and solid particles (as disclosed in WO 00/46164) exhibit some acid resistance but low hydrocarbon resistance.

### Examples 5 to 13

In each of the following Examples, the sample stones were prepared using the following procedure.
- Aggregate and sand materials (minerals such as sand, pebbles and crushed granite; crushed glass; aluminium scrap particles) are pre-heated to 300 °C overnight.
- Filler materials (Powders with grain size less then 0.063 mm: such as TiO2, CaCO3) are pre-heated to 300 °C overnight.
- Polymeric Binder (granulate or pellets of recycled PET, PP, PE, PVC) is pre-heated in an oven heated at 180-240 C (depending on the binder content) over a 20 minute period.

Unless otherwise specified, the PET used in each Example('r-PET') is recycled PET in granulate form of maximum size 10x10x2mm, obtained from the PET recycling company Re-plano, of Germany. The PVC contamination in the r-PET is less than 50ppm.

The polypropylene used was obtained from Basell.

The aggregate and sand materials are mixed with the polymeric binder in a heated mixing bowl. After 2 to 5 minutes a homogeneous mixture of the aggregate, sand and polymeric binder is reached (240 to 250 °C) and at that moment the filler material is added (if appropriate). The mixing is continued over another 2 to 5 minutes until the filler material is well distributed in the mixture and the mixture has reached a temperature in the range of from 245 to 265 °C.

The mixture is then poured into a container and compressed into a stone, under a compression load of from 6 to 15 tons on the surface. Depending on the amount of material the mixtures are poured into a preheated mould with different dimensions. The mixtures with a total amount of from 600 to 1200g are poured into a preheated mould of size 100mm in diameter and thickness up to 75 mm and a cylindrical block prepared sized as blocks made according to the Marshall method. The mixtures with a total amount of 1500g to 4000g are poured into a preheated mould of size with dimensions 200mm by 100mm and a thickness up to 100mm depending on the total amount of mixture. This mixture is pressed in a press using from 6 to 15 tons' weight over 5 to 10 minutes (a pressure of 75 Bars). The container is then quench cooled in water and the product stone is taken out after at least 10 minutes' cooling.

In each Example, flexural strength was measured by the Dutch building standard NEN EN 198-1.

### Examples 5 and 6

In these Examples, extensive further testing of each sample prepared was carried out according to the following Dutch building industry standard tests for various building materials as noted:
Flexural strength: NEN EN 198-1, test method for cement
Compressive strength: NEN EN 196-1, test method for cement
Mohs hardness: NEN EN 101, surface hardness test for ceramic tiles
Young's modulus: ASTM C 580, Test method for flexural strength and modulus of elasticity of chemical resistant mortars, grout and monolithic surfacings
Free water absorption: NEN EN 99 (without baking), test for ceramic tiles.

### Example 5

40 Samples, in the form of Marshall blocks, were made following the standard procedure above from the following components:

| Material | Weight (percentage) |
|---|---|
| Pebbles (2-8 mm) | 800 g (38.3 %) |
| sand (0-0.5 mm) | 800 g (38.3 %) |
| TiO2 | 50 g (2.4 %) |
| r-PET | 400 g (19.1 %) |
| PP | 40 g (1.9 %) |

The 40 samples were tested at 30 °C. The average results of these tests are as follows:
- Flexural strength: 24.1 N/mm²
- Young's modulus: 7310 N/mm²
- Compression strength: 83 N/mm²
- Tensile strength: 9 N/mm²
- Mohs hardness: 7-5 Mohs
- Free water absorption: 0.2 %
- Volumetric mass: 2100 g/l

### Example 6

Following the standard procedure above, 9 samples were prepared utilising aluminium scrap derived from cold aluminium processing - the scrap was in the form of flakes thinner than 3 mm in width and up to 50 mm long.

| aluminium test samples: | |
|---|---|
| Aluminium scrap | 50 g (2.7 %) |
| sand (0-0.5 mm) | 1200 g (64.9 %) |
| TiO2 | 50 g (2.7 %) |
| r-PET | 500 g (27 %) |
| PP | 50 g (2.7 %) |

These samples were tested at 30 °C. The average results of these tests are as follows:
- Flexural strength: 34.6 N/mm²
- Young's modulus: 7660 N/mm²

### Example 7 - Effect of varying binder proportion

In this Example, varying percentages of binder were used. For some of the samples, flexural strength was assessed.

| 5.9 % binder | |
|---|---|
| Pebbles (grain size 2-8 mm) | 47.1 % |
| Silver sand (0-0.5 mm) | 47.1 % |
| r-PET | 5.3 % |
| PP | 0.6 % |

A product stone was obtained.

| 11.1 % binder | |
|---|---|
| Pebbles (grain size 2-8 mm) | 44.4 % |
| Silver sand (0-0.5 mm) | 44.4 % |
| r-PET | 10 % |
| PP | 1.1 % |

A product stone was obtained.

In the following samples the amount of binder was varied as shown in the tables below. The ratio of PET to PP was kept constant, with PP being used in an amount that was 10 % by weight of the total PET used.

| Composition test samples: | |
|---|---|
| Pebbles (2-8 mm) | 800 g |
| silver sand (0-0.5 mm) | 800 g |
| TiO2 | 110 g |
| PET | 250-600 g |
| PP | 25-250 g |

| Binder w% | Flexural strength (N/mm²) |
|---|---|
| 14.9 | 14.8 |
| 16.2 | 14.8 |
| 18.4 | 20.9 |
| 20.5 | 25.8 |
| 34.1 | 30.1 |

From these results it can be seen that for a combination of recycled PET and polypropylene the stones produced showed an increase in flexural strength when the binder content was increased above 16.2 w%, and a levelling off of strength increase, but still an increasing strength, as the binder proportion approached 35 w%.

### Example 8 - Use of different thermoplastic polymers

Using the standard preparation technique, sample stones were prepared using recycled polyethylene and polypropylene either as the sole binder component or in combination with PET. The details and results are given below.

| r-PET as sole binder: | |
|---|---|
| Pebbles (2-8 mm) | 800 g (38.3%) |
| Sand (0-0.5 mm) | 800 g (38.3%) |
| TiO2 | 50 g (2.4%) |
| r-PET | 440 g (21.2%) |
| PP | 0 g (0%) |

The standard mixing procedure was used, but mixing was much more difficult as the mixture was more sticky than the standard mixtures of the previous Examples. Flexural strength: 29.8 N/mm2.

### Combination binder of r-PET and polypropylene:

| | |
|---|---|
| Pebbles (2-8 mm) | 800g (38.3%) |
| Sand (0-0.5 mm) | 800g (38.3%) |
| TiO2 | 50g (2.4%) |
| r-PET | 360g (17.2%) |
| PP | 80g (3.8%) |

A product stone was obtained. Flexural strength: 21.7 N/mm2.

### Combination binder of r-PET and recycled polyethylene

| | |
|---|---|
| Pebbles (2-8 mm) | 38.2 % |
| Silver sand (0-0.5 mm) | 38.2 % |
| r-PET | 21 % |
| PE (granulated shampoo bottles) | 2.6 % |

A product stone was obtained. No strength tests were conducted, but it could be easily seen that the product was significantly weaker than the sample stones of Example 5.

### Example 9 - Use of recycled PET with high PVC content

The same components as those for the Example 5 stones were used except that the recycled PET used was Avengard C, obtained from the PET recycling company Avangard of Mexico. This PET has a PVC content of greater than 1 w% and is indicative of recycle-grade PET prevalent in Mexico. No difficulty was found in preparing a product stone using this grade of recycled PET.

### Example 10

In this Example only filler in the form of calcium carbonate was utilised:

| | |
|---|---|
| CaCO3 (powder grain size < 0.063 mm) | 54.8 % |
| r-PET | 41.1 % |
| PP | 4.1 % |

A product stone was obtained.

### Example 11

In this Example crushed granite of varying grain size was used as the solid particles.

| | |
|---|---|
| Crushed Norwegian granite (8-11 mm) | 23.3% |
| Crushed Norwegian granite (4-8 mm) | 23.3% |
| Crushed Norwegian granite (2-6 mm) | 18.8% |
| Crushed Norwegian granite (0-2 mm) | 14% |
| r-PET | 18.7% |
| PP | 1.9% |

Flexural strength: 13.9 N/mm2.

| | |
|---|---|
| Crushed Norwegian granite (4-8 mm) | 39.2% |
| Crushed Norwegian granite (0-2 mm) | 39.2% |
| r-PET | 19.6% |
| PP | 2% |

Flexural strength: 17 N/mm2

### Example 12 - use of recycled glass

It was found possible to make a proper stone utilising broken blue glass in place of the mineral pebbles previously used:

| | |
|---|---|
| Broken glass pebbles (2-8 mm): | 39.2 % |
| Sand (0-0.5 mm) | 39.2 % |
| r-PET: | 19.6 % |
| PP: | 2 % |

A product stone was obtained, which had an attractive blue marbled appearance.

### Example 13

### Variation of flexural strength with filler content

| Composition test samples: | |
|---|---|
| Pebbles (2-8 mm) | 800 g |
| silver sand (0-0.5 mm) | 800 g |
| TiO2 | 0-200 g |
| PET | 400 g |
| PP | 40 g |

| TiO2 content (w%) | Flexural strength (N/mm²) |
|---|---|
| 0 | 16.1 |
| 2.4 | 19.5 |
| 5.4 | 25.8 |
| 8.9 | 18.1 |

As can be seen from the above results, the flexural strength changes as a function of filler content. With titanium dioxide as filler an optimum flexural strength is given when the filler is present in an amount in the range of from 2 to 9 w%, basis the total stone.

### Example 14 - Use of extrusion

The following components were used:

| | |
|---|---|
| Sand (0-0.5 mm) | 70 % |
| r-PET (Re-Plano, < 50 PPM PVC): | 30 % |

The mixture as extruded in a Coperion Werner Pfleiderer ZSK-25 twin screw extruder, with a mixing temperature up to 285 °C. The fluid product paste was poured into a mould of 30 cm x 30 cm x 20 cm and cooled in the open air. Assessing the product stone visually, the extrusion led to a very good mixing of the sand and binder which was much better than any of the batch-mixed products of the previous Examples, however shrinkage cracks were seen to form on cooling, and the product stone may be undesirable for use as a construction element, despite a very high measured flexural strength of 54 N/mm2 (measured by the test method NEN EN 198-1).

## Claims

1. Process for the preparation of a composition, which comprises a matrix of solid particles embedded in a binder, wherein the binder is present in an amount in the range of from 15 to 50 % by weight and comprises waste or recycled polymer selected from the group of polypropylene, polyethylene terephthalate, polybutylene terephthalate and mixtures thereof, which process comprises mixing heated particles and binder, shaping if desired, and allowing the mixture to solidify, wherein the binder is heated prior to mixing to a temperature in the range of from 50 to 240°C, and solid particles are heated prior to mixing to a temperature in the range of from 150 to 350°C, both heated independently of each other prior to mixing, such that on mixing the temperature of the mixture is in the range of from 230 to 300°C, the solid particles being heated to a higher temperature than the binder.

2. Process as claimed in claim 1, wherein the polymer is waste or recycled polyethylene terephthalate, optionally in admixture with waste or recycled polypropylene, which is preheated to a temperature in the range of from 180 to 240°C and wherein the solid particles are preheated to a temperature of 300°C.

3. Process as claimed in claim 1 or claim 2, wherein the binder is used in the form of granules or flakes.

4. Process as claimed in any one of claims 1 to 3, wherein the solid particles are a combination of aggregate, filler and sand, all of which are heated prior to mixing with the binder, with the aggregate and sand materials being mixed first with the binder, and the filler mixed in subsequently.

5. Composition which comprises a matrix of solid particles, which comprises at least two groups of particle types selected from aggregate, sand and filler, embedded in a binder, which is predominantly polyethylene terephthalate, wherein the binder is present in an amount in the range of from 1 to 50% by weight.

6. Composition as claimed in claim 5, wherein the binder also contains polypropylene and the binder is present in an amount in the range of from 20 to 35% by weight.

7. Composition as claimed in claim 5 or claim 6, which contains titanium dioxide as filler in an amount in the range of from 2 to 9% by weight.

8. Use of a composition obtainable by a process as claimed in any one of claims 1 to 4; or which is claimed in any one of claims 5 to 7, in construction.

9. Construction element which is obtainable by a process as claimed in any one of claims 1 to 4, or which comprises a composition as claimed in any one of claims 5 to 7.

## Patentansprüche

1. Verfahren zur Herstellung einer Zusammensetzung, die eine Matrix aus festen Teilchen, eingebettet in ein Bindemittel, umfaßt, worin das Bindemittel in einer Menge im Bereich von 15 bis 50 Gew.-% vorliegt und Abfallpolymer oder recycliertes Polymer umfaßt, ausgewählt aus der Gruppe Polypropylen, Polyethylenterephthalat, Polybutylenterephthalat und Gemischen davon, welches Verfahren ein Mischen von erhitzten Teilchen und Bindemittel, gewünschtenfalls ein Verformen und ein Erstarrenlassen des Gemisches umfaßt, worin das Bindemittel vor dem Vermischen auf eine Temperatur im Bereich von 50 bis 240°C erwärmt wird und die festen Teilchen vor dem Vermischen auf eine Temperatur im Bereich von 150 bis 350°C erhitzt werden, wobei beide unabhängig voneinander vor dem Vermischen derart erhitzt werden, daß beim Vermischen die Temperatur des Gemisches im Bereich von 230 bis 300°C liegt, wobei die festen Teilchen auf eine höhere Temperatur erhitzt werden als das Bindemittel.

2. Verfahren nach Anspruch 1, worin das Polymer ein Polyethylenterephthalatabfall oder recycliertes Polyethylenterephthalat ist, gegebenenfalls im Gemisch mit Polypropylenabfall oder recycliertem Polypropylen, welches Polymer auf eine Temperatur im Bereich von 180 bis 240°C vorerhitzt wird und worin die festen Teilchen auf eine Temperatur von 300°C vorerhitzt werden.

3. Verfahren nach Anspruch 1 oder 2, worin das Bindemittel in Form von Granulat oder Flocken verwendet wird.

4. Verfahren nach einem der Ansprüche 1 bis 3, worin die festen Teilchen eine Kombination aus Aggregat, Füller und Sand sind, die alle vor dem Vermischen mit dem Bindemittel erhitzt werden, wobei die Aggregat- und Sandmaterialien zuerst mit dem Bindemittel vermischt werden und der Füller anschließend' eingemischt wird.

5. Eine Zusammensetzung, die eine Matrix aus festen Teilchen aufweist, die wenigstens zwei Gruppen von Teilchenarten umfassen, ausgewählt unter Aggregat, Sand und Füller, eingebettet in ein Bindemittel, das überwiegend Polyethylenterephthalat ist, worin das Bindemittel in einer Menge im Bereich von 1 bis 50 Gew.-% vorliegt.

6. Zusammensetzung nach Anspruch 5, worin das Bindemittel auch Polypropylen enthält und das Bindemittel in einer Menge im Bereich von 20 bis 35 Gew.-% vorliegt.

7. Zusammensetzung nach Anspruch 5 oder 6, das Titandioxid als Füller in einer Menge im Bereich von 2 bis 9 Gew.-% enthält.

8. Verwendung einer nach einem Verfahren, wie in einem der Ansprüche 1 bis 4 beansprucht, erhältlichen Zusammensetzung, oder einer Zusammensetzung, die in einem Ansprüche 5 bis 7 beansprucht ist, im Bauwesen.

9. Bauelement, das nach einem Verfahren, wie in einem der Ansprüche 1 bis 4 beansprucht, erhältlich ist, oder das eine Zusammensetzung umfaßt, wie in einem Ansprüche 5 bis 7 beansprucht.

## Revendications

1. Procédé pour la préparation d'une composition comprenant une matrice de particules solides noyées dans un liant, dans lequel le liant est présent en quantité dans la plage de 15 à 50% en poids et comprend un polymère résiduel ou recyclé choisi dans le groupe du polypropylène, du poly(téréphtalate d'éthylène), du poly(téréphtalate de butylène) et de leurs mélanges, lequel procédé comprend les étapes consistant à mélanger les particules chauffées et le liant, à en effectuer le moulage si on le souhaite et à laisser le mélange se solidifier, dans lequel on chauffe le liant avant de le mélanger à une température dans la plage de 50 à 240°C et on chauffe les particules solides avant de les mélanger à une température dans la plage de 150°C à 350°C, tous deux étant chauffés indépendamment l'un de l'autre avant mélange de sorte que, lors du mélange, la température du mélange se situe dans la plage de 230 à 300°C, les particules solides étant chauffées à une température plus élevée que le liant.

2. Procédé selon la revendication 1, dans lequel le polymère est un poly(téréphtalate d'éthylène) résiduel ou recyclé, facultativement mélangé à du polypropylène résiduel ou recyclé, qui est préchauffé dans la plage de 180 à 240°C et dans lequel les particules solides sont préchauffées à une température de 300°C.

3. Procédé selon la revendication 1 ou 2, dans lequel le liant est utilisé sous la forme de granulés ou de paillettes.

4. Procédé selon l'une quelconque des revendications 1 à 3, dans lequel les particules solides forment une combinaison d'agrégat, de charge et de sable, tous étant chauffés avant mélange avec le liant, les matériaux agrégat et sable étant mélangés en premier au liant et la charge mélangée ensuite.

5. Composition comprenant une matrice de particules solides, qui comprend au moins deux groupes de types de particules choisis parmi agrégat, sable et charge, noyés dans un liant qui est principalement du poly(téréphtalate d'éthylène), dans lequel le liant est présent en quantité dans la plage de 1 à 50% en poids.

6. Composition selon la revendication 5, dans laquelle le liant contient également du polypropylène et le liant est présent en quantité dans la plage de 20 à 35% en poids.

7. Composition selon la revendication 5 ou 7, qui contient du dioxyde de titane comme charge en quantité dans la plage de 2 à 9% en poids.

8. Utilisation d'une composition, qui peut être obtenue selon l'une quelconque des revendications 1 à 4 ou selon l'une quelconque des revendications 5 à 7, dans le bâtiment.

9. Elément de construction qui peut être obtenu par un procédé selon l'une quelconque des revendications 1 à 4 ou qui comprend une composition selon l'une quelconque des revendications 5 à 7.
